# EUROPEAN PATENT SPECIFICATION

(11) **EP 2 300 242 B1**
(45) Date of publication and mention of the grant of the patent: **20.02.2013**
(21) Application number: 09762726.9
(22) Date of filing: 04.06.2009
(51) Int. Cl.: B60B 17/00

(54) **RAILROAD WHEEL WITH WEAR RESISTANT FLANGE**
EISENBAHNRAD MIT VERSCHLEISFESTEM SPURKRANZ
ROUE PORTEUSE DE CHEMIN DE FER AVEC UN BOUDIN DE ROUE RÉSISTANT À L'USURE

(30) Priority: 09.06.2008 PL 38539208
(43) Date of publication of application: 30.03.2011
(73) Proprietor: Plasma System S.A., 41-103 Siemianowice Slaskie (PL)
(72) Inventor: ZDROJEWSKI, Bogdan, Roman, 40-750 Katowice (PL)
(74) Representative: Gizinska-Schohe, Malgorzata
(86) International application number: PCT/PL2009/000062
(87) International publication number: WO 2009/151345

(56) References cited:
- CH-A- 231 393
- CH-A- 385 906
- DE-A1- 19 615 245
- GB-A- 1 475 976
- GB-A- 1 566 589

## Description

The subject of the invention is the railroad wheel with wear resistant of flange used in the different kinds of rail transport : railways, trams and mine transport. Such a wheel according to the preamble of claim 1 is known from CH 231 393 A.

In railway engineering occur permanently the serious problems with excessive grindability of the lateral surfaces of flanges being present on the tires and wheel rims. The smallest offset of the wheel sets in the rail track results in rolling of wheels along the circles having different radii and in consequence results in change of the angle of attack of wheel onto the rails. During rolling of the axle sets on the straight track, the wheel flanges in principle do not touch the rails at definite speeds, but on the curves at high speeds it comes to considerable friction between these flanges and head of rail, what results in high grindability and thus to wear called also undercutting of these flanges (sharp flanges), which could even threaten the travelling safety in railway transport.

The steady quiet running of the rail-vehicle, travelling safety, noise level emitted during vehicle travelling on the track as well as the service life between interval of time between subsequent very expensive repairs of the wheel sets depends in large measure on the geometrical features of the rolling profile. Within the framework of these repairs the dozen of thousands of railroad wheels are re-profiled in order to restore the correct dimensions of the wheel sets.

Up to now, for example, in order to reduce the grindability of the wheel flanges and to prolong the overhaul intervals, the different kinds of lubricants and devices for the lubrication of above mentioned wheel flanges and rails are being used, particularly on the curves in the track.

So far, from the analytical & theoretical publication "Application of elastohydrodynamic theories of lubrication to rail/wheel systems with curved tracks", Technical University of Silesia - fascicle 22 (transport), M. Sitarz, H. P. Evans - 1994, it is known the elastohydrodynamic lubrication of the railroad wheel flanges during travelling on curves in the track with high external loads. It is foreseen, that such lubrication of the wheel-rail system can reduce the wear of rails and wheels 5-7 times and reduce the fuel consumption by about 30 %. It results from the numerical calculations that the biggest changes in oil film thickness occur within the radius range R = (13 - 15) mm.

The publication "Running gears of track-vehicles", Z. Romaniszyn, Ed. Technical University of Kraków, 2005, discloses the known devices for lubrication of wheel flanges using oils, sticky greases or solid oils. The latter comprise the inserts manufactured from the polymer-stabilized constituents, enabling obtainment of low friction factor values, ranging from 0,06 to 0,1; insensitive to variations within wide temperature range. The known lubricant application devices include, among other things, the appliance consisting mostly of electronic control system, connected with the transmitter of speedometer, feeding conduit, oil tank, pneumatic solenoid valve, spraying device and low-pressure oil and air pipes. The primary task of the electronic system is steering the pneumatic and hydraulic part of the lubrication system, which lubricates the borders of rail and wheel surfaces. The operating personnel of track-vehicle chooses the track sections requiring activation or stoppage of above mentioned lubricating system.

The hitherto existing methods and devices aiming at increasing the durability of railroad wheels by lubricating the flanges of the latter are difficult and troublesome ones. The common disadvantage of these solutions could be imperfect devices and control systems in dosage of lubricant. The lubrication of the wheel flange should be performed close before the curve in the track in exactly determined place, that is on the wheel flange. An inaccurate supplying of lubricant shall not fulfil the required task, and besides the grease could get at the rolling surfaces of the railroad wheels producing the disturbances in vehicle braking.

The purpose of present invention is exclusion of lubrication of the wheel flange surfaces in contact with rail, especially on curves in the track, in order to reduce the cost of repairs and re-profiling of the wheel sets due to excessive grindability.

In accordance with the present invention this purpose was successfully accomplished. The essence of the invention consists in placing of the durable anti-abrasion layer on the circumferential inner and / or outer surface of the wheel flange. The circumferential anti-abrasion layer spreads advantageously in its width to the fore-part of the rolling surface of the railroad wheel from one side, and to the fore-part of the flange rounding from the other side. On the surface of outer side of said flange is placed additionally a durable circumferential anti-abrasion layer. The circumferential anti-abrasion layer is placed in durable manner round the whole flange tip and on its lateral initial sections: inner and outer ones.

The application of the durable anti-abrasion layer can increase 5 to 7 times the lifetime of the wheel flanges and his profile, reduce the energy consumption by about 30 % when travelling on curves in the track, reduce emission of noise in form of squeaks, improve the travelling safety by reducing the derailment threat during running at the curves and switch turnouts.

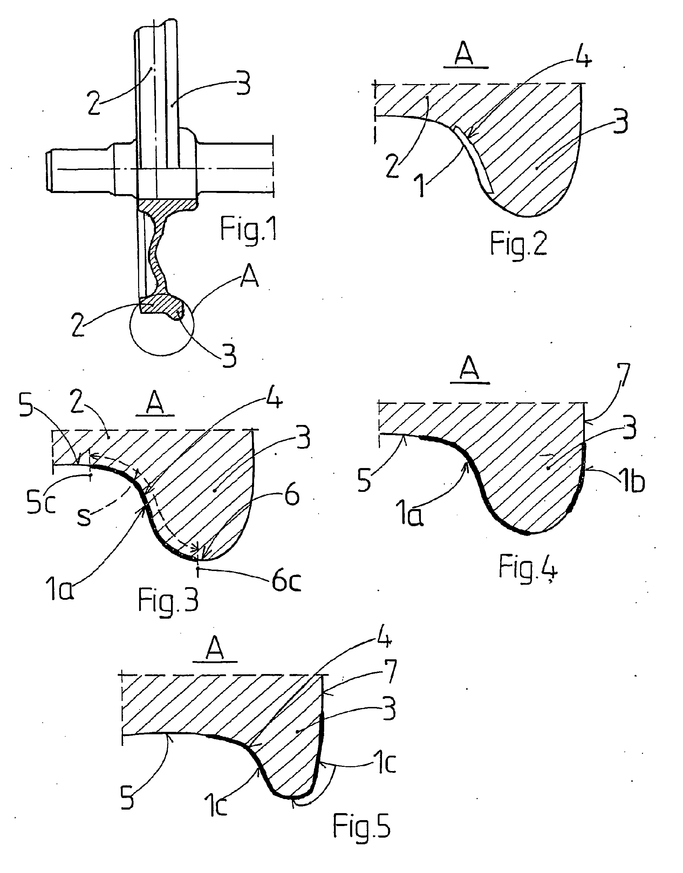

The subject of present invention is shown in form of examples of execution in figures, wherein fig. 1. shows in lateral view and in broken-out section a portion of the running wheel set and fig. 2 to 4 - details A designated in fig.1 representing the examples of execution of the railroad wheel including its wear resistant flange, particularly regarding the kind of use.

In accordance with the invention (fig. 2), on the circumferential outer surface 4 of flange 3 of the wheel 2 is placed in durable manner the anti-abrasion layer 1. Depending on the need, for given kind of transport mean, for execution of the anti-abrasion layer can be advantageously applied for example, bronze, teflon, bronze with graphite and/or molybdenum disulfide. As shown in fig. 3, the circumferential anti-abrasion layer 1a spreads advantageously in its width to the fore-part 5c of the rolling surface 5 of the railroad wheel 2 from one side, and to the fore-part 6c of rounding 6 of flange 3 from the other side. Fig. 4 shows additional durable layer 1b placed on the inner surface 7 of the flange 3. Instead in fig. 5 an optional structure has been represented, for example for the tram lines, where the circumferential anti-abrasion layer 1c is placed na the surface round the whole tip 6 of flange 3 and on its lateral outer and inner surfaces 4 and 7.

## Claims

1. The railroad wheel (2) with wear resistant flange, (3) comprising the wheel flange surfaces, which have a frictional contact with rail during travelling, **characterized in that** an anti-abrasion layer (1) made of bronze is placed in durable manner on the circumferential outer surface (4) of flange (3) of the wheel (2).

2. The railroad wheel according to claim 1, **characterized in that** the circumferential anti-abrasion layer (1a) spreads on the circumferential outer surface (4) of flange (3) to the fore-part (5c) of the rolling surface (5) of the railroad wheel (2) from one side, and to the fore-part (6c) of rounding (6) of flange (3) from the other side.

3. The railroad wheel according to claim 2, **characterized in that** a durable circumferential anti-abrasion layer (1b) is placed additionally on the inner surface (7) of flange (3).

4. The railroad wheel according to claim 1, **characterized in that** the circumferential anti-abrasion layer (1 c) is placed on the surface round the whole tip (6) of flange (3) and on its lateral outer and inner surfaces (4) and (7).

## Patentansprüche

1. Eisenbahnrad (2) mit verschleißfestem Spurkranz (3), der die Radspurkranzflächen umfasst, die während der Fahrt in Reibungskontakt mit der Schiene stehen, **dadurch gekennzeichnet, dass** auf der Außenumfangsfläche (4) des Spurkranzes (3) des Rads (2) auf dauerhafte Weise eine Verschleißschutzschicht (1) angeordnet ist, die aus Bronze hergestellt ist.

2. Eisenbahnrad nach Anspruch 1, **dadurch gekennzeichnet, dass** die Umfangs-Verschleißschutzschicht (1 a) auf der Außenumfangsfläche (4) des Spurkranzes (3) von einer Seite bis zu dem Vorderteil (5c) der Lauffläche (5) des Eisenbahnrads (2) und von der anderen Seite bis zu dem Vorderteil (6c) der Abrundung (6) des Spurkranzes (3) verteilt ist.

3. Eisenbahnrad nach Anspruch 2, **dadurch gekennzeichnet, dass** auf der Innenoberfläche (7) des Spurkranzes (3) zusätzlich eine dauerhafte Umfangs-Verschleißschutzschicht (1 b) angeordnet ist.

4. Eisenbahnrad nach Anspruch 1, **dadurch gekennzeichnet, dass** die Umfangs-Verschleißschutzschicht (1c) auf der Oberfläche um die gesamte Kuppe (6) des Spurkranzes (3) und an seiner seitlichen Außen- und Innenoberfläche (4) und (7) angeordnet ist.

## Revendications

1. Roue porteuse de chemin de fer (2) avec boudin (3) résistant à l'usure, comprenant les surfaces de boudin de roue qui sont en contact par adhérence avec le rail pendant le déplacement, **caractérisée en ce qu'**une couche anti-abrasion (1) fabriquée en bronze est placée de manière durable sur la surface extérieure circonférentielle (4) du boudin (3) de la roue (2).

2. Roue porteuse de chemin de fer selon la revendication 1, **caractérisée en ce que** la couche anti-abrasion circonférentielle (1 a) s'étend sur la surface extérieure circonférentielle (4) du boudin (3) vers l'avant-corps (5c) de la surface roulante (5) de la roue porteuse de chemin de fer (2) d'un côté, et vers l'avant-corps (6c) de l'arrondi (6) du boudin (3) de l'autre côté.

3. Roue porteuse de chemin de fer selon la revendication 2, **caractérisée en ce qu'**une couche anti-abrasion circonférentielle (1 b) durable est placée en plus sur la surface intérieure (7) du boudin (3).

4. Roue porteuse de chemin de fer selon la revendication 1, **caractérisée en ce que** la couche anti-abrasion circonférentielle (1 c) est placée sur la surface autour du sommet entier (6) du boudin (3) ainsi que sur ses surfaces extérieure et intérieure (4) et (7).
